# EUROPÄISCHE PATENTSCHRIFT

(11) **EP 0 785 443 B1**
(45) Veröffentlichungstag und Bekanntmachung des Hinweises auf die Patenterteilung: **11.12.2002**
(21) Anmeldenummer: 97100013.8
(22) Anmeldetag: 02.01.1997
(51) Int. Cl.: G01S 15/10, G01S 7/527, G01N 29/18

(54) **Verfahren und Einrichtung zur Laufzeitmessung eines elektrischen, elektromagnetischen oder akustischen Signals**
Method and device for measuring propagation time of electric, electromagnetic or acoustic signals
Procédé et système pour la mesure du temps de propagation de signaux électriques, électromagnétiques, ou acoustiques

(30) Priorität: 26.01.1996 DE 19602810
(43) Veröffentlichungstag der Anmeldung: 23.07.1997
(73) Patentinhaber: SIEMENS AKTIENGESELLSCHAFT, 80333 München (DE)
(72) Erfinder: Kroemer, Nils, 09337 Hohenstein-Ernstthal (DE)

(56) Entgegenhaltungen:
- EP-A- 0 185 133
- US-A- 3 824 464
- US-A- 5 123 286
- WITHERS P: "TIME OF FLIGHT DETECTOR FOR ULTRASONIC INSTRUMENTATION" ELECTRONIC ENGINEERING, Bd. 65, Nr. 796, 1. April 1993, Seite 32 XP000351757

## Beschreibung

Die Erfindung betrifft ein Verfahren und eine Einrichtung zur Laufzeitmessung eines elektrischen, elektromagnetischen oder akustischen Signals nach dem Oberbegriff des Anspruchs 1 bzw. des Anspruchs 4.

Aus der EP 0 452 531 sind ein derartiges Verfahren und eine derartige Meßeinrichtung bekannt. Die Laufzeitmessung beispielsweise eines Ultraschallsignals beruht darauf, daß von einem Sendewandler ein pulsförmiges Schallsignal in das Meßmedium eingekoppelt und nach dem Durchlaufen der Meßstrekke von einem Empfangswandler detektiert wird. Die Schallaufzeit ist die Zeitdifferenz zwischen dem Sendevorgang und dem Eintreffen des Ultraschallsignals am Empfangsort. Bei einer Schallreflexion wird das gesendete Schallsignal an einer Grenzschicht zwischen dem Meßmedium und einem angrenzenden Medium reflektiert, bevor es zum Empfangswandler gelangt. In diesem Fall kann auch ein einziger Schallwandler wechselseitig als Sende- und Empfangswandler betrieben werden.

Die Ultraschall-Laufzeitmessung ist für vielfältige Meßaufgaben einsetzbar. Hierzu zählen beispielsweise die Abstandsmessung und die Durchflußmessung in gasförmigen oder flüssigen Medien. Ein anderes typisches Anwendungsgebiet ist die zerstörungsfreie Werkstoffprüfung, zu der im weiteren Sinne auch die Wanddickenmessung gehört.

Für die Bestimmung der Laufzeit ist in der obengenannten Druckschrift das Puls-Front-Verfahren beschrieben, das im einfachsten Fall darauf beruht, daß die Impulsfront des analogen Empfangssignals mittels eines Schwellwertdetektors erfaßt wird. Ein mit dem Sendevorgang gestarteter Laufzeitzähler wird bei Ansprechen des hierzu verwendeten Empfangssignalkomparators gestoppt. Nachteilig hierbei ist, daß der exakte Stoppzeitpunkt vom Verhältnis des eingestellten Schwellwertes zur Signalamplitude abhängt. Dadurch ist die erzielbare Genauigkeit der Laufzeitmessung bei veränderlicher Signalamplitude eingeschränkt. Dieser Nachteil wird umgangen, indem der auf das Ansprechen des Empfangssignalkomparators nächstfolgende Signal-Nulldurchgang für das Stoppen des Laufzeitzählers genutzt wird. Die Nulldurchgangsdetektion erfolgt mit einem zweiten Komparator, dessen Schaltschwelle nahe dem Bezugspotential des Empfangssignals eingestellt ist. Mit diesem Verfahren ist eine von der Empfangssignalamplitude nahezu unabhängige Laufzeitmessung möglich.

Die bekannte Meßeinrichtung arbeitet mit einer voreingestellten Polarität des Empfangssignalkomparators. Dies bedeutet beispielsweise, daß stets eine positive Signalhalbwelle zur Freigabe des Stoppsignals und ein fallender Signal-Nulldurchgang zum Stoppen des Laufzeitzählers benutzt werden. Diese Signalauswertung in nur einer Polarität ist jedoch immer dann nachteilig, wenn die Form des Empfangssignals gegenüber einem definierten Referenzzustand, z. B. durch Variation der Übertragungseigenschaften des Meßmediums, verändert wird. Ändert sich bei der Ultraschall-Abstandsmessung nach dem Reflexionsverfahren die Signalform derart, daß gegenüber dem Ausgangszustand beispielsweise erst die nächstfolgende Schwingung ausgewertet wird, so führt dies zu einem positiven systematischen Meßfehler von einer halben Wellenlänge. Eine weitere Applikation, bei der die Signalform sehr stark mit dem zu messenden Medium variiert, ist die Ultraschall-Durchflußmessung. Insbesondere bei Meßrohren, in denen das Schallsignal durch Reflexionen umgelenkt wird, kann es zu Phasenänderungen beim Empfangssignal kommen, durch welche die Polarität der auszuwertenden Signalhalbwelle umgekehrt wird. Je nach Wellenlänge und Übertragungsweg kann ein Laufzeitfehler, welcher einer halben Wellenlänge entspricht, trotz des Laufzeit-Differenzverfahrens zu beachtlichen Meßfehlern führen. Die Medienabhängigkeit der Form der beim Empfänger ankommenden Wellengruppen hat im wesentlichen zwei Ursachen. Zum einen unterscheiden sich die Wellenlängen in verschiedenen Medien je nach Schallgeschwindigkeit. Parasitäre Reflexionen wirken sich, z. B. durch Interferenz, je nach Wellenlänge unterschiedlich auf Nutzreflexionen aus. Es kann daher beispielsweise für die Anwendung bei einem Ultraschall-Durchflußmesser nicht davon ausgegangen werden, daß sich der Schall in einem ungestörten Schallfeld ausbreitet. Zum anderen sind Dämpfungseffekte auf dem Übertragungsweg vom Meßmedium abhängig.

Der Erfindung liegt die Aufgabe zugrunde, ein Verfahren und eine Einrichtung zur Laufzeitmessung eines elektrischen, elektromagnetischen oder akustischen Signals zu schaffen, welche die obengenannten Nachteile vermeiden und die Meßsicherheit verbessern.

Zur Lösung dieser Aufgabe weist das neue Verfahren der eingangs genannten Art die im kennzeichnenden Teil des Anspruchs 1 und die neue Einrichtung die im kennzeichnenden Teil des Anspruchs 4 genannten Merkmale auf. In den abhängigen Ansprüchen sind vorteilhafte Weiterbildungen der Erfindung angegeben.

Die Erfindung hat den Vorteil, daß unabhängig von der jeweils eingestellten Polarität der ersten Schwellenspannung des ersten Komparators, der eine positive oder negative Halbwelle der Wellengruppe detektiert, korrekte Signale für die Freigabe des Stoppsignals, das Stoppen des Laufzeitzählers und somit genauere Meßwerte geliefert werden. Bei geringem Schaltungsaufwand wird eine eindeutige, fehlerfreie Zuordnung zwischen der auszuwertenden Signalhalbwelle und dem Signal-Nulldurchgang zum Stoppen des Laufzeitzählers gewährleistet. Durch eine beliebig verschiebbare erste Schwellenspannung, die durch einen Digital-Analog-Konverter erzeugt wird, kann eine dynamische Anpassung der Signalauswertung an veränderliche Signalformen auch über das Bezugspotential hinweg in den positiven oder negativen Bereich erfolgen. Dadurch wird eine Bereichserweiterung in die andere Polarität erreicht. Ohne die Gefahr eines systematischen Fehlers können positive und negative Signalhalbwellen zur Laufzeitmessung ausgewertet werden. Die Laufzeitmessung kann durch einen voreinstellbaren Impulszähler so modifiziert werden, daß ein beliebig vorgebbarer und zudem polaritätsunabhängiger Signal-Nulldurchgang für das Stoppen des Laufzeitzählers selektierbar ist. Aus einer Meßreihe mit mehreren Messungen für verschiedene selektierte Nulldurchgänge können Informationen über die Form der Wellengruppe gewonnen und einer Auswerteeinheit zur Verfügung gestellt werden. Da sich parasitäre Reflexionen, beispielsweise bei der Ultraschall-Durchflußmessung, auf die verschiedenen Nulldurchgänge einer Wellengruppe abweichend auswirken, kann durch eine Auswertung mehrerer Nulldurchgänge eine verbesserte Genauigkeit des Meßergebnisses erreicht werden. Durch die Verwendung einer Impulserzeugungseinrichtung kann die erste Schwellenspannung ohne weiteres umgeschaltet werden auf positive oder negative Werte, ohne die Polarität der Komparatoren an deren Ein- oder Ausgängen anpassen zu müssen. Dadurch kann die Schwellenspannung auf die Halbwelle gelegt werden, die zur vorhergehenden mit der größten Dynamik angestiegen ist, gleichgültig, ob diese positive oder negative Polarität besitzt. Dabei wird keinerlei zusätzliche Steuerlogik benötigt. Zwischen Freigabe des Stoppsignals und dem Stoppsignal für den Laufzeitzähler selbst ist in jedem Fall ein Mindestabstand von mehr als einem Viertel der Wellenlänge gewährleistet. Dadurch wird ein Stoppen des Laufzeitzählers bei einem zu späten Nulldurchgang sicher vermieden. Ein weiterer Vorteil ist darin zu sehen, daß durch eine Impulserzeugungseinrichtung nach dem zweiten Komparator bei jedem Nulldurchgang des Empfangssignals ein Impuls gebildet wird. Dadurch ist es möglich, sowohl bei Nulldurchgängen in positiver wie auch in negativer Richtung ein Stoppsignal für den Laufzeitzähler zu erzeugen.

Anhand der Zeichnungen, in denen Ausführungsbeispiele der Erfindung dargestellt sind, werden im folgenden die Erfindung sowie Ausgestaltungen und Vorteile näher erläutert.

Es zeigen:
- Figur 1: ein Prinzipschaltbild einer Einrichtung zur Laufzeitmessung,
- Figuren 2 und 3: qualitative Darstellungen des Empfangssignals und der Ausgangssignale der beiden Komparatoren jeweils für eine negative und eine positive erste Schwellenspannung,
- Figur 4: die Verläufe der Komparatorausgangssignale nach Figur 3, ergänzt um die Ausgangssignale der Impulserzeugungseinrichtungen,
- Figur 5: einen Ausschnitt des Prinzipschaltbilds nach Figur 1, in welchem den Impulserzeugungseinrichtungen Impulszähler nachgeschaltet sind, und
- Figur 6: eine einfache Impulserzeugungseinrichtung.

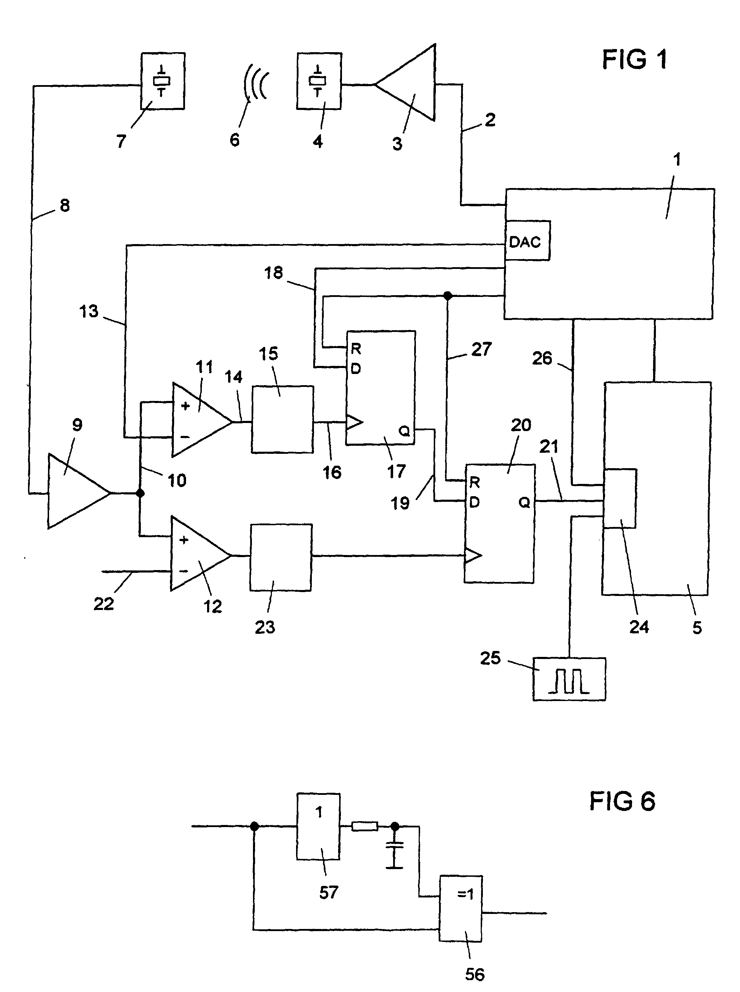

Gemäß Figur 1 wird von einem Mikro-Controller 1, welcher sämtliche Steuer- und Auswertefunktionen übernimmt, zu einem bestimmten Zeitpunkt auf einer Leitung 2 über einen Sendeverstärker 3 ein pulsförmiges Signal zur Anregung eines Sendewandlers 4 erzeugt. Gleichzeitig wird ein Laufzeitzähler 5 zur Messung der Laufzeit eines pulsförmigen Ultraschallsignals 6 gestartet. Das in ein Meßmedium abgestrahlte pulsförmige Ultraschallsignal 6 gelangt nach dem Durchlaufen einer Meßstrecke zu einem Empfangswandler 7 und wird dort in ein elektrisches Signal auf einer Leitung 8 umgewandelt. Mit einem Empfangsverstärker 9 wird dieses elektrische Signal verstärkt und als Empfangssignal auf einer Leitung 10 gleichzeitig einem ersten Komparator 11 und einem zweiten Komparator 12 zugeführt. Im ersten Komparator 11 wird das Empfangssignal mit einer ersten Schwellenspannung auf einer Leitung 13 verglichen, die im Mikro-Controller 1 durch einen Digital-Analog-Wandler DAC erzeugt wird. Der erste Komparator 11 liefert ein positives Ausgangssignal auf einer Leitung 14, wenn das Empfangssignal größer als die Schwellenspannung ist. Die Schwellenspannung ist so eingestellt, daß sie außerhalb des Rauschens auf der Leitung 10 liegt. Somit wird durch den ersten Komparator 11 das Eintreffen einer Wellengruppe beim Empfangswandler 7 angezeigt. Jede Flanke auf der Leitung 14 wird durch eine Impulserzeugungseinrichtung 15 in einen kurzen Impuls auf einer Leitung 16 umgewandelt. Die steigende Flanke eines Impulses bewirkt ein Schalten eines ersten D-Flip-Flops 17, sofern das Ereignis innerhalb eines Meßfensters eintritt, das der Mikro-Controller 1 durch einen High-Pegel auf einer Leitung 18 vorgibt. Der Q-Ausgang des ersten D-Flip-Flops 17 ist über eine Leitung 19 mit dem Dateneingang eines zweiten D-Flip-Flops 20 verbunden. Durch einen High-Pegel auf der Leitung 19 wird das zweite D-Flip-Flop 20 zur Erzeugung eines Stoppsignals auf einer Leitung 21 freigegeben. Der zweite Komparator 12 wird auf einer Leitung 22 mit einer zweiten Schwellenspannung versorgt, die etwa dem Bezugspotential des Empfangssignals entspricht. Der zweite Komparator 12 schaltet somit immer in der Nähe der Nulldurchgänge des Empfangssignals. Der Ausgang des zweiten Komparators 12 ist über eine zweite Impulserzeugungseinrichtung 23, die ebenfalls bei jeder Flanke an ihrem Eingang einen kurzen Impuls an ihrem Ausgang erzeugt, mit einem Takteingang des zweiten D-Flip-Flops 20 verbunden. Der Q-Ausgang des zweiten D-Flip-Flops 20 wechselt somit seinen Zustand mit der ersten steigenden Flanke an seinem Takteingang, nachdem das Eintreffen einer Wellengruppe durch den ersten Komparator 11 detektiert wurde. Mit einem High-Pegel auf der Leitung 21 wird ein zuvor offenes Tor 24 des Laufzeitzählers 5 verriegelt, so daß weitere Impulse eines Quarzoszillators 25 nicht mehr gezählt werden. Die Frequenz des Quarzoszillators 25 liegt im Bereich einiger Megahertz. Der Startzeitpunkt einer Laufzeitmessung wird dem Laufzeitzähler 5 vom Mikro-Controller 1 durch eine ebenfalls auf das Tor 24 geführte Leitung 26 angezeigt. Der Inhalt des Laufzeitzählers 5 wird von dem Mikro-Controller 1 übernommen und weiterverarbeitet. Nach der Messung werden das erste D-Flip-Flop 17 und das zweite D-Flip-Flop 20 durch einen Reset-Impuls auf einer Leitung 27 zurückgesetzt.

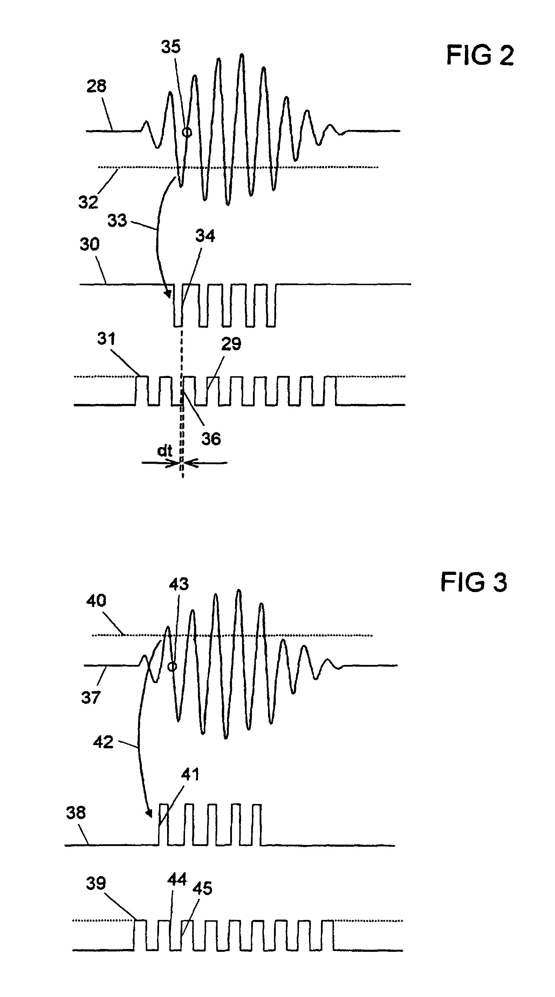

In Figur 2 sind beispielhaft Verläufe eines Empfangssignals 28, eines Ausgangssignals 30 des ersten Komparators 11 (Figur 1) und eines Ausgangssignals 31 des zweiten Komparators 12 (Figur 1) dargestellt. Eine erste Schwellenspannung 32 auf der Leitung 13 (Figur 1) ist so eingestellt, daß die zweite negative Halbwelle einer Wellengruppe des Empfangssignals 28 detektiert wird. An Figur 2 wird deutlich, wie wichtig es ist sicherzustellen, daß immer zu Beginn einer detektierten Halbwelle ein Signal zur Freigabe eines Stoppsignals erzeugt wird. Aufgrund der Polarität der Eingangsbeschaltung des ersten Komparators 11 ist der Ruhezustand des Ausgangssignals 30 ein High-Pegel. Bei Beginn der detektierten negativen Halbwelle tritt in Reaktion auf das Unterschreiten der Schwellenspannung 32 durch das Empfangssignal 28 eine negative Flanke - in Figur 2 durch einen Wirkungspfeil 33 angedeutet - auf. Wäre die Impulserzeugungseinrichtung 15 (Figur 1) dem ersten Komparator 11 nicht nachgeschaltet, so würde das erste vorderflankengetaktete D-Flip-Flop 17 erst bei einer steigenden Flanke 34 des Ausgangssignals 30 und damit beim Ende der negativen Halbwelle ein Signal zur Freigabe eines Stoppsignals für den Laufzeitzähler erzeugen. Ein Zeitabstand dt zum nächstfolgenden Nulldurchgang des Empfangssignals 28, der in Figur 2 durch einen Kreis 35 markiert ist und mit einer steigenden Flanke 36 des Ausgangssignals 31 des zweiten Komparators 12 angezeigt wird, könnte je nach Betrag der Schwellenspannung 32 und Frequenz des Ultraschallsignals so klein werden, daß er für eine ordnungsgemäße Freigabe des zweiten D-Flip-Flops 20 nicht mehr ausreicht. In diesem Falle würde erst eine nachfolgende, steigende Flanke 29 des Ausgangssignals 31 ein Stoppsignal für den Laufzeitzähler hervorrufen, so daß ein Meßfehler von einer ganzen Schwingungsdauer der Schwingungen der Wellengruppe entstehen würde. Da ein solcher Meßfehler zudem von der Form des Empfangssignals 28 abhängen würde, wäre er keine feste, berechenbare Größe und somit nur schwer beherrschbar.

Figur 3 zeigt Verläufe eines Eingangssignals 37, eines Ausgangssignals 38 des ersten Komparators 11 und eines Ausgangssignals 39 des zweiten Komparators 12 für eine positive Schwellenspannung 40. Wenn die erste positive Halbwelle der Wellengruppe des Empfangssignals 37 die Schwellenspannung 40 zum erstenmal überschreitet, wird aufgrund der Polarität der Eingangsbeschaltung des ersten Komparators 11 eine steigende Flanke 41 nahe dem Beginn in der ersten Hälfte der Halbwelle erzeugt, wie dies durch einen Wirkungspfeil 42 in Figur 3 angedeutet ist. Unabhängig davon, ob eine Impulserzeugungseinrichtung 15 im Signalweg des Ausgangssignals des ersten Komparators 11 eingebaut ist, wird bereits zu diesem Zeitpunkt durch das erste D-Flip-Flop 17 (Figur 1) ein Signal zur Freigabe eines Stoppsignals für den Laufzeitzähler erzeugt. Wäre allerdings die Impulserzeugungseinrichtung 23 nicht vorhanden, so würde nicht bei dem darauffolgenden, in Figur 3 durch einen Kreis 43 markierten Nulldurchgang des Empfangssignals 37, der durch eine fallende Flanke 44 des Ausgangssignals 39 des zweiten Komparators 12 angezeigt wird, der Laufzeitzähler 5 gestoppt, sondern erst bei einer darauffolgenden, steigenden Flanke 45 des Ausgangssignals 39. Dies würde zu einem Meßfehler von einer halben Schwingungsdauer der Schwingungen der Wellengruppe führen. Dieser Meßfehler könnte aber durch Berücksichtigung einer Korrekturzeit bei der Laufzeitmessung wieder weitgehend eliminiert werden, wobei diese Korrekturzeit auch weitere Zeit-Offsets, z. B. schaltungsbedingte Phasendrehungen, Schallaufzeiten in Vorlaufstrecken, beinhalten kann.

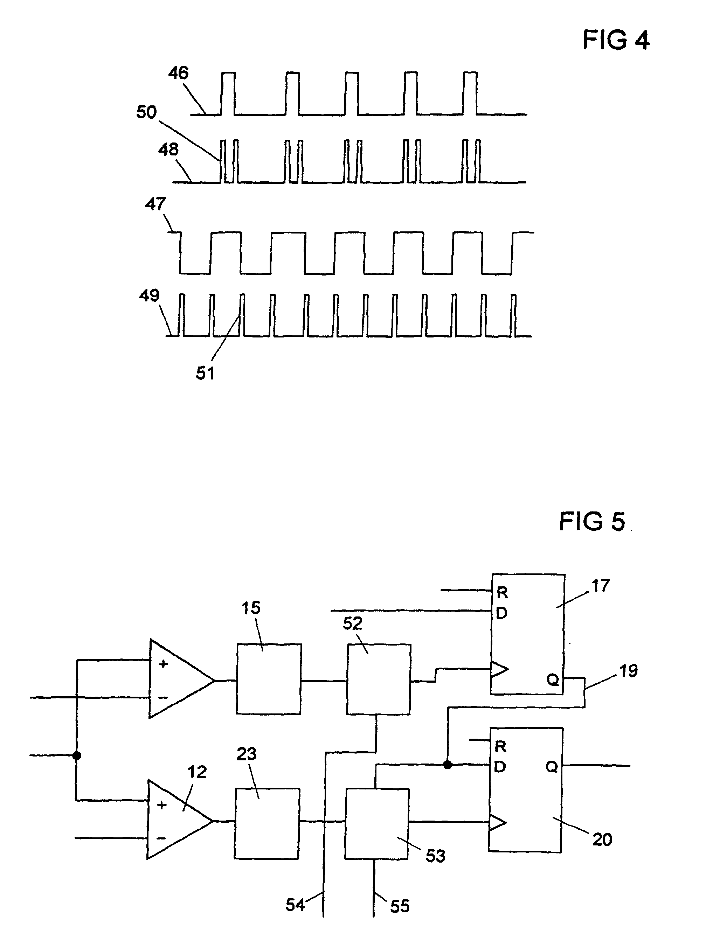

Figur 4 zeigt Verläufe eines Ausgangssignals 46 des ersten Komparators 11, eines Ausgangssignals 47 des zweiten Komparators 12, die demjenigen nach Figur 3 ähnlich sind, sowie Verläufe eines Ausgangssignals 48 der ersten Impulserzeugungseinrichtung 15 und eines Ausgangssignals 49 der zweiten Impulserzeugungseinrichtung 23. Die Impulserzeugungseinrichtungen 15 und 23 liefern bei jeder Signalflanke der Ausgangssignale 46 und 47 Impulse fest eingestellter Dauer und Polarität. Die Eigenschaften der Impulse werden entsprechend der Schwingungsdauer der Schwingungen empfangener Wellengruppen und entsprechend der nachfolgenden Auswerteschaltung festgelegt. Da durch die Impulserzeugungseinrichtung 15 immer nahe dem Beginn einer Halbwelle des Empfangssignals unabhängig von der eingestellten Polarität der ersten Schwellenspannung eine steigende Flanke 50 am Takteingang des ersten D-Flip-Flops 17 erzeugt wird, ist sichergestellt, daß der Abstand zum nächsten Nulldurchgang in jedem Fall mehr als ein Viertel der Schwingungsdauer beträgt. Somit ist ausgeschlossen, daß der nächste Nulldurchgang aufgrund eines zu kurzen Zeitabstands dt übergangen und beim falschen Nulldurchgang ein Stoppsignal gegeben wird. Durch die zweite Impulserzeugungseinrichtung 23, die bei jeder Flanke des Ausgangssignals 47 einen Impuls auf ihrem Ausgangssignal 49 erzeugt, wird auch ein Meßfehler von einer halben Schwingungsdauer aufgrund fehlerhafter Polarität vermieden. Unabhängig von der eingestellten Polarität des zweiten Komparators 12 wird bei jedem Nulldurchgang ein Impuls erzeugt. Somit wird bei einer Flanke 51 des Ausgangssignals 49 der zweiten Impulserzeugungseinrichtung 23 das zweite D-Flip-Flop 20 getaktet und ein Stoppsignal an den Laufzeitzähler 5 gegeben. Es wird nun der korrekte Nulldurchgang ausgewertet.

Eine weitere, in den Figuren nicht dargestellte Möglichkeit, sicherzustellen, daß immer durch Schalten des ersten Komparators nahe dem Beginn einer positiven oder negativen Halbwelle des Empfangssignals ein Signal zur Freigabe eines Stoppsignals für den Laufzeitzähler erzeugt wird, ist das Umschalten der Polaritäten entweder der Eingangsbeschaltungen der beiden Komparatoren 11 und 12 oder das Invertieren ihrer Ausgangssignale in Abhängigkeit von der Polarität der Schwellenspannung am ersten Komparator 11. Die Realisierung einer hierzu erforderlichen Schaltung ist aber aufwendiger als die Realisierung des in Figur 1 gezeigten Ausführungsbeispiels, das sich durch Einfachheit der zusätzlich erforderlichen Mittel auszeichnet.

In dem Ausführungsbeispiel nach Figur 5, die lediglich einen Schaltungsausschnitt darstellt, wurde das Ausführungsbeispiel nach Figur 1 dahingehend verändert, daß zwischen die Ausgänge der beiden Impulserzeugungseinrichtungen 15, 23 und die beiden Takteingänge der D-Flip-Flops 17, 20 zusätzlich jeweils voreinstellbare Impulszähler 52 bzw. 53 geschaltet wurden. Die beiden vorderflankengetakteten D-Flip-Flops 17 und 20 werden erst getaktet, wenn die an den Impulszählern 52 bzw. 53 voreingestellte Pulszahl erreicht ist. Auf diese Weise kann das Stoppen des Laufzeitzählers 5 gegenüber der detektierten Halbwelle des Empfangssignals definiert verzögert werden. Der dem zweiten Komparator 12 zugeordnete Impulszähler 53 wird erst freigegeben, wenn durch das erste D-Flip-Flop 17 ein Signal zur Freigabe eines Stoppsignals auf der Leitung 19 gegeben wurde. Die von dem Mikro-Controller 1 vorgegebenen Einstellwerte der Impulszähler 52 und 53 werden diesen über Leitungen 54 bzw. 55 zugeführt. Bei der AusWertung werden sie durch Abzug einer Korrekturzeit berücksichtigt.

In dem in Figur 5 gezeigten Ausführungsbeispiel sind zwei Impulszähler vorgesehen. Prinzipiell ist aber zur Wahl eines beliebigen Nulldurchgangs einer Wellengruppe bereits ein Impulszähler ausreichend. Um in jedem Fall einen ausreichenden Zeitabstand dt zu gewährleisten, sollte der Impulszähler 52 nur auf eine ungerade Impulszahl voreingestellt werden.

Die mit der Verwendung eines Impulszählers ermöglichte Nulldurchgangsauswahl kann zu einer weiteren Verbesserung der Meßsicherheit genutzt werden, wenn eine rechnerische Auswertung der über mehrere Nulldurchgänge gemessenen Laufzeiten erfolgt. Beispielsweise bewirkt eine Mittelwertbildung über mehrere Nulldurchgänge eine Verringerung des Meßfehlers, da Phasenverschiebungen, die durch Überlagerung der Schallpulse von parasitären Übertragungswegen zum Schallpuls des Hauptweges entstehen und eine Verschiebung des jeweiligen Nulldurchgangs in positiver oder negativer Richtung verursachen, das Meßergebnis aufgrund der Mittelwertbildung weniger beeinflussen.

Eine einfache Einrichtung zur Impulserzeugung enthält gemäß Figur 6 ein digitales Antivalenzglied 56, auf dessen einen Eingang ein Signal direkt und auf dessen anderen Eingang dasselbe Signal über einen Buffer 57 mit nachgeordneter Verzögerungsschaltung geführt ist.

In den Ausführungsbeispielen wurde die Laufzeitmessung eines Ultraschallsignals beschrieben. Die Erfindung ist aber auch zur Laufzeitmessung anderer, insbesondere elektrischer, elektromagnetischer oder akustischer Signale geeignet, die beim Empfänger als über mehrere Schwingungen ansteigende und wieder abfallende Wellengruppe ankommen.

## Patentansprüche

1. Verfahren zur Laufzeitmessung eines elektrischen, elektromagnetischen oder akustischen Signals zwischen einem Sender (4) und einem in Abstand dazu angeordneten Empfänger (7), wobei der Sender pulsförmige Signale (6) abgibt, die den Empfänger (7) als über mehrere Schwingungen ansteigende und wieder abfallende Wellengruppe erreichen, wobei das Empfangssignal durch einen ersten Komparator (11) mit einer ersten vorgebbaren Schwellenspannung verglichen wird, wobei das Empfangssignal durch einen zweiten Komparator (12) mit einer nahe seinem Gleichanteil liegenden zweiten Schwellenspannung verglichen wird und wobei die Laufzeitmessung bei einem auf ein Schalten des ersten Komparators (11) folgendes Schalten des zweiten Komparators (12) gestoppt wird,
**dadurch gekennzeichnet,**
- **daß** unabhängig davon, ob die erste Schwellenspannung größer oder kleiner als die zweite Schwellenspannung ist, immer durch das Schalten des ersten Komparators (11) in der ersten Hälfte nahe dem Beginn einer positiven bzw. negativen Halbwelle des Empfangssignals ein Signal zur Freigabe eines Stoppsignals für einen Laufzeitzähler (5) erzeugt wird.

2. Verfahren nach Anspruch 1, **dadurch gekennzeichnet,**
- **daß** durch eine Impulserzeugungseinrichtung (15) bei jeder Flanke des Ausgangssignals des ersten Komparators (11) ein kurzer Impuls erzeugt wird und
- **daß** auf einen Impuls in der ersten Hälfte nahe dem Beginn einer Halbwelle das Signal zur Freigabe des Stoppsignals für den Laufzeitzähler (5) erzeugt wird.

3. Verfahren nach Anspruch 2, **dadurch gekennzeichnet,**
- **daß** eine Mehrzahl von Einzelmessungen durchgeführt wird, wobei jeweils der Laufzeitzähler (5) bei einer auf das Schalten des ersten Komparators (11) folgenden vorgebbaren Anzahl von Schaltvorgängen des zweiten Komparators (12) gestoppt wird und nach Abzug einer Korrekturzeit, die von der jeweils vorgegebenen Anzahl und der Dauer einer Halbwelle abhängt, die jeweilige Laufzeit ermittelt wird, und
- **daß** als Ergebnis der Laufzeitmessung der Mittelwert aus einer Mehrzahl der ermittelten Laufzeiten berechnet wird.

4. Einrichtung zur Laufzeitmessung eines elektrischen, elektromagnetischen oder akustischen Signals,
- mit einem Sender (4) zur Abgabe pulsförmiger Signale (6),
- mit einem Empfänger (7), der in Abstand zum Sender (4) angeordnet ist und den die pulsförmigen Signale (6) als über mehrere Schwingungen ansteigende und wieder abfallende Wellengruppen erreichen,
- mit einem ersten Komparator (11) zum Vergleich des Empfangssignals mit einer ersten vorgebbaren Schwellenspannung und
- mit einem zweiten Komparator (12) zum Vergleich des Empfangssignals mit einer nahe seinem Gleichanteil liegenden zweiten Schwellenspannung,
**dadurch gekennzeichnet,**
- **daß** Mittel (15, 23, 17, 20) vorhanden sind, um unabhängig davon, ob die erste Schwellenspannung größer oder kleiner als die zweite Schwellenspannung ist, immer durch das Schalten des ersten Komparators (11) in der ersten Hälfte nahe dem Beginn einer positiven bzw. negativen Halbwelle des Empfangssignals ein Signal zur Freigabe eines Stoppsignals für einen Laufzeitzähler (5) zu erzeugen.

5. Einrichtung nach Anspruch 4, **dadurch gekennzeichnet,**
- **daß** das Ausgangssignal des ersten Komparators (11) über eine erste Impulserzeugungseinrichtung (15), die bei jeder Flanke einen kurzen Impuls erzeugt, auf den Takteingang eines ersten flankengetakteten D-Flip-Flops (17) geführt ist, an dessen Dateneingang ein Steuersignal zur Festlegung eines Meßfensters anliegt und dessen Q-Ausgang auf den Dateneingang eines zweiten flankengetakteten D-Flip-Flops (20) geführt ist, und
- **daß** das Ausgangssignal des zweiten Komparators (12) über eine zweite Impulserzeugungseinrichtung (23) auf den Takteingang des zweiten D-Flip-Flops (20) geführt ist, das an seinem Ausgang das Stoppsignal für den Laufzeitzähler (5) liefert.

6. Einrichtung nach Anspruch 5, **dadurch gekennzeichnet,**
- **daß** dem Takteingang des ersten D-Flip-Flops (17) und/oder des zweiten D-Flip-Flops (20) ein voreinstellbarer Impulszähler (52, 53) vorgeschaltet ist.

## Claims

1. Method for measuring propagation time of an electrical, electromagnetic or acoustic signal between a transmitter (4) and a receiver (7) disposed at a distance therefrom, wherein the transmitter emits pulse-type signals (6) that reach the receiver (7) as a wave group rising and falling again over a plurality of oscillations, wherein the incoming signal is compared by a first comparator (11) with a first predeterminable threshold voltage, wherein the incoming signal is compared by a second comparator (12) with a second threshold voltage situated close to its steady component, and wherein the measurement of propagation time is stopped at a switching of the second comparator (12) following a switching of the first comparator (11), **characterized**
- **in that**, regardless of whether the first threshold voltage is greater or less than the second threshold voltage, a signal for releasing a stop signal for a propagation-time counter (5) is always generated by the switching of the first comparator (11) in the first half close to the beginning of a positive or negative half-wave of the incoming signal.

2. Method according to Claim 1, **characterized**
- **in that** a short pulse is generated by a pulse-generating device (15) for every edge of the output signal of the first comparator (11), and
- **in that** the signal for releasing the stop signal for the propagation-time counter (5) is generated in response to a pulse in the first half close to the beginning of a half-wave.

3. Method according to Claim 2, **characterized**
- **in that** a plurality of individual measurements is carried out, wherein the propagation-time counter (5) is stopped in each case at predefinable number of switching operations of the second comparator (12) following the switching of the first comparator (11), and the respective propagation time is determined after subtracting a correction time that depends on the respective predetermined number and the duration of a half-wave, and
- **in that** the average of a plurality of the propagation times determined is calculated as a result of the measurement of propagation time.

4. Device for measuring propagation time of an electrical, electromagnetic or acoustic signal,
- comprising a transmitter (4) for emitting pulse-type signals (6),
- comprising a receiver (7) that is disposed at a distance from the transmitter (4) and which the pulse-type signals (6) reach as wave groups rising and falling again over a plurality of oscillations,
- comprising a first comparator (11) for comparing the incoming signal with a first predefinable threshold voltage, and
- comprising a second comparator (12) for comparing the incoming signal with a second threshold voltage situated near to its steady component
**characterized**
- **in that** means (15, 23, 17, 20) are present in order always to generate a signal for releasing a stop signal for a propagation-time counter (5) by the switching of the first comparator (11) in the first half close to the beginning of a positive or negative half-wave of the incoming signal, regardless of whether the first threshold voltage is greater or less than the second threshold voltage.

5. Device according to Claim 4, **characterized**
- **in that** the output signal of the first comparator (11) is fed via a first pulse-generating device (15) that generates a short pulse for every edge to the clock input of a first edge-clocked D-type flip-flop (17) to whose data input a control signal is applied to determine a measurement window and whose Q output is fed to the data input of a second edge-clocked D-type flip-flop (20), and
- **in that** the output signal of the second comparator (12) is fed via a second pulse-generating device (23) to the clock input of the second D-type flip-flop (20) that delivers the stop signal for the propagation-time counter (5) at its output.

6. Device according to Claim 5, **characterized**
- **in that** a presettable pulse counter (52, 53) is connected upstream of the clock input of the first D-type flip-flop (17) and/or the second D-type flip-flop (20).

## Revendications

1. Procédé de mesure du temps de propagation d'un signal électrique, électromagnétique ou acoustique entre un émetteur (4) et un récepteur (7) disposé à distance de celui-ci, l'émetteur émettant des signaux (6) en forme d'impulsions qui atteignent le récepteur (7) sous la forme d'un groupe d'ondes s'élevant et redescendant sur plusieurs oscillations, le signal de réception étant comparé par un premier comparateur (11) à une première tension de seuil qui peut être prescrite, le signal de réception étant comparé par un deuxième comparateur (12) à une deuxième tension de seuil proche de sa partie continue et la mesure de la propagation étant arrêtée lors d'une mise en circuit du deuxième comparateur (12) suivant une mise en circuit du premier comparateur (11),
**caractérisé**
- **en ce que**, indépendamment du point de savoir si la première tension de seuil est supérieure ou inférieure à la deuxième tension de seuil, il est toujours produit, par la mise en circuit du premier comparateur (11) dans la première moitié proche du début d'une demi-onde positive ou négative du signal de réception, un signal de validation d'un signal d'arrêt pour un compteur (5) de temps de propagation.

2. Procédé suivant la revendication 1, **caractérisé**
- **en ce que** par un dispositif (15) de production d'impulsions il est produit, pour chaque front du signal de sortie du premier comparateur (11), une impulsion courte et
- **en ce que**, après une impulsion dans la première moitié proche du début d'une demi-onde, il est produit le signal de validation du signal d'arrêt du compteur (5) du temps de propagation.

3. Procédé suivant la revendication 2, **caractérisé**
- **en ce qu'**il est effectué une pluralité de mesures individuelles, le compteur (5) du temps de propagation étant arrêté pour un nombre qui peut être prescrit d'opérations de mise en circuit du deuxième comparateur (12) suivant la mise en circuit du premier comparateur (11) et, après écoulement d'une durée de correction qui dépend du nombre prescrit respectivement et de la durée d'une demi-onde, la durée de propagation respective étant déterminée et
- **en ce que** l'on calcule comme résultat de la mesure du temps de propagation la valeur moyenne d'une pluralité de temps de propagation déterminés.

4. Dispositif de mesure du temps de propagation d'un signal électrique, électromagnétique ou acoustique
- comprenant un émetteur (4) d'émission de signaux (6) en forme d'impulsions,
- un récepteur (7) qui est disposé à distance de l'émetteur (4) et que les signaux (6) en forme d'impulsions atteignent sous la forme d'un groupe d'ondes s'élevant et s'abaissant à nouveau sur plusieurs oscillations,
- comprenant un premier comparateur (11) pour comparer le signal de réception à une première tension de seuil qui peut être prescrite et
- comprenant un deuxième comparateur (12) pour comparer le signal de réception à une deuxième tension de seuil proche de sa partie continue,
**caractérisé**
- **en ce qu'**il est prévu des moyens (15, 23, 17, 20) pour produire, indépendamment du point de savoir si la première tension de seuil est supérieure ou inférieure à la deuxième tension de seuil toujours, par la mise en circuit du premier comparateur (11) dans la première moitié proche du début d'une demi-onde positive ou négative du signal de réception, un signal de validation d'un signal d'arrêt d'un compteur (5) de temps de propagation.

5. Dispositif suivant la revendication 4, **caractérisé**
- **en ce que** le signal de sortie du premier comparateur (11) est envoyé par un premier dispositif (15) de production d'impulsions, qui produit pour chaque flanc sur l'entrée d'horloge d'une première bascule (17) de type D cadencée par le front tandis qu'à l'entrée, pour les données de cette bascule, s'applique un signal de commande destiné à fixer une fenêtre de mesure et dont le signal de sortie Q est envoyé à l'entrée pour les données d'une deuxième bascule (20) de type D cadencée par le front et
- **en ce que** le signal de sortie du deuxième comparateur (12) est envoyé par un deuxième dispositif (23) de production d'impulsions à l'entrée d'horloge de la deuxième bascule (20) de type D, qui fournit à sa sortie le signal d'arrêt du compteur (15) de temps de propagation.

6. Dispositif suivant la revendication 5, **caractérisé**
- **en ce qu'**il est monté en amont de l'entrée d'horloge de la première bascule (17) de type D et/ou de la deuxième bascule (20) de type D un compteur (52, 53) d'impulsions qui peut être réglé à l'avance.
